(19) Europäisches Patentamt
European Patent Office
Office européen des brevets

(11) Veröffentlichungsnummer : **0 099 535**
**B1**

(12) # EUROPÄISCHE PATENTSCHRIFT

(45) Veröffentlichungstag der Patentschrift : **22.10.86**

(21) Anmeldenummer : **83106774.9**

(22) Anmeldetag : **11.07.83**

(51) Int. Cl.[4] : **C 07 C149/20**, C 07 C149/14, C 07 C 83/06, C 07 C147/02, C 07 C147/14, C 07 C121/46, C 07 C131/00, A 01 N 35/06, A 01 N 37/44, A 01 N 37/50, A 01 N 41/10

(54) **Cyclohexan-1,3-dionderivate, Verfahren zu ihrer Herstellung und ihre Verwendung zur Bekämpfung unerwünschten Pflanzenwuchses.**

(30) Priorität : **22.07.82 DE 3227332**

(43) Veröffentlichungstag der Anmeldung : **01.02.84 Patentblatt 84/05**

(45) Bekanntmachung des Hinweises auf die Patenterteilung : **22.10.86 Patentblatt 86/43**

(84) Benannte Vertragsstaaten : **BE CH DE FR GB IT LI NL**

(56) Entgegenhaltungen : **DE-A- 2 822 304**

(73) Patentinhaber : **BASF Aktiengesellschaft**
**Carl-Bosch-Strasse 38**
**D-6700 Ludwigshafen (DE)**

(72) Erfinder : **Becker, Rainer, Dr.**
**Im Haseneck 22**
**D-6702 Bad Duerkheim (DE)**
Erfinder : **Jahn, Dieter, Dr.**
**Burgunder Weg 8**
**D-6803 Edingen-Neckarhausen (DE)**
Erfinder : **Keil, Michael, Dr.**
**Limesstrasse 3**
**D-6700 Ludwigshafen (DE)**
Erfinder : **Himmele, Walter, Dr.**
**Eichenweg 14**
**D-6909 Walldorf (DE)**
Erfinder : **Wuerzer, Bruno, Dr., Dipl.-Landwirt**
**Ruedigerstrasse 13**
**D-6701 Otterstadt (DE)**

**EP 0 099 535 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Cyclohexan-1,3-dionderivate, Verfahren zu ihrer Herstellung sowie Herbizide, die diese Verbindungen als Wirkstoffe enthalten.

Es ist bekannt, Cyclohexan-1,3-dionderivate zur selektiven Bekämpfung von unerwünschten Gräsern anzuwenden (DE-OS 28 22 304).

Es wurde gefunden, daß Cyclohexan-1,3-dionderivate der Formel

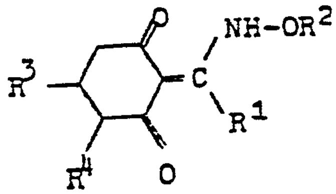

(I)

in der

$R^1$ $C_1$-$C_4$-Alkyl,

$R^2$ $C_1$-$C_5$-Alkyl, gegebenenfalls durch Halogen substituiertes $C_2$-$C_5$-Alkenyl oder $C_2$-$C_5$-Alkinyl,

$R^3$ $C_3$-$C_{10}$-Alkyl, das in beliebiger Position 2 bis 4 der Heteroatome O und/oder S und/oder der Gruppen —SO— und/oder —$SO_2$— enthält und

$R^4$ Wasserstoff, Cyano, Methyl oder —$COOR^5$, wobei $R^5$ für $C_1$-$C_5$-Alkyl steht, bedeuten,

sowie Salze dieser Verbindungen gegen Gräser herbizid wirksam sind und breitblättrige Kulturpflanzen und monokotyle Kulturen, welche nicht zur Familie der Gräser (Gramineen) zählen, nicht schädigen, andererseits aber für Getreidearten, welche zur Gräserfamilie gehören, überraschenderweise selektiv sind.

Die Verbindungen der Formel I können in mehreren tautomeren Formen auftreten, die alle vom Patentanspruch umfaßt werden :

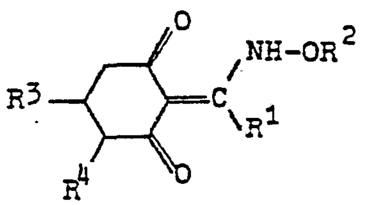

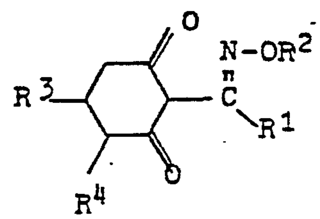

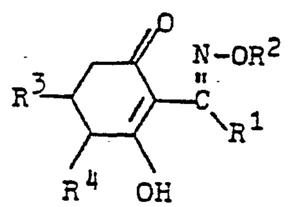

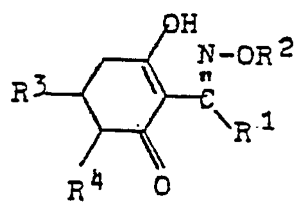

$R^1$ in Formel I bedeutet unverzweigtes oder verzweigtes $C_1$-$C_4$-Alkyl, wie Methyl, Ethyl, n-Propyl, i-Propyl, n-Butyl ; $R^2$ bedeutet unverzweigtes oder verzweigtes $C_1$-$C_5$-Alkyl, gegebenenfalls durch Halogen substituiertes $C_2$-$C_5$-Alkenyl oder $C_2$-$C_5$-Alkinyl, wie Methyl, Ethyl, n-Propyl, i-Propyl, n-Butyl, i-Butyl, t-Butyl, Allyl, 3-Chlor-prop-2-enyl, 2-Chlor-prop-2-enyl, 2,3,3-Trichlor-prop-2-enyl, 2,3-Dibrom-prop-2-enyl, Propargyl ; $R^3$ bedeutet unverzweigte oder verzweigte $C_3$-$C_{10}$-Alkylreste, die in beliebiger Position 2 bis 4 der Heteroatome O und/oder S und/oder der Gruppen —SO— und/oder —$SO_2$— enthalten, beispielsweise Alkoxyalkoxyalkyl, Alkylthioalkylthioalkyl, Alkylthioalkoxyalkyl, Alkoxyalkylthioalkyl, Alkylsulfonylalkylsulfonylalkyl, Alkoxyalkylsulfonylalkyl, Alkoxyalkylsulfinylalkyl, wie Ethoxyethylthiopropyl, Ethylthioethylthiopropyl, Ethoxyethylthioethyl, Ethylthioethylthioethyl, Butoxyethoxyethyl, Methoxyethoxyethyl, Ethoxyethoxyethyl, 2-Ethoxyethylsulfinyl-2-methyl-ethyl, 2-Ethoxyethylsulfonyl-2-methyl-ethyl.

$R^4$ bedeutet außer Wasserstoff, Cyano oder Methyl eine Alkoxycarbonylgruppe der Formel —$COOR^5$, in der $R^5$ für einen unverzweigten oder verzweigten $C_1$-$C_5$-Alkylrest, wie Methyl, Ethyl, i-Propyl, n-Butyl, n-Pentyl, steht.

Bevorzugt sind Verbindungen der Formel I, bei denen $R^3$ Alkylthioalkylthioalkyl oder Alkoxyalkoxyalkyl mit jeweils 3 bis 10, insbesondere 3 bis 6 Kohlenstoffatomen, und $R^4$ Wasserstoff bedeuten.

Als Salze der Verbindungen der Formel I kommen beispielsweise die Alkalimetallsalze, insbesondere die Kalium- oder Natriumsalze, Erdalkalimetallsalze, insbesondere Calcium-, Magnesium- oder Bariumsalze, sowie Mangan-, Kupfer-, Zink- oder Eisensalze in Betracht.

Die Verbindungen der Formel I können durch Umsetzung von Verbindungen der Formel

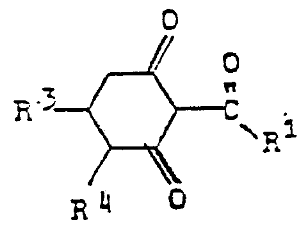

(II)

in der $R^1$, $R^3$ und $R^4$ die obengenannten Bedeutungen haben, mit Hydroxylaminderivaten $R^2O—NH_3Y$, in der $R^2$ die obengenannten Bedeutungen hat und Y ein Anion bedeutet, erhalten werden.

Man führt die Reaktion zweckmäßigerweise in heterogener Phase in einem inerten Verdünnungsmittel bei einer Temperatur zwischen 0 und 80 °C oder zwischen 0 °C und dem Siedepunkt des Reaktionsgemisches in Gegenwart einer Base durch. Geeignete Basen sind beispielsweise Carbonate, Hydrogencarbonate, Acetate, Alkoholate, Hydroxide oder Oxide von Alkali- oder Erdalkalimetallen, insbesondere von Natrium, Kalium, Magnesium, Calcium. Außerdem können auch organische Basen, wie Pyridin oder tertiäre Amine, Verwendung finden.

Die Umsetzung verläuft besonders gut in einem pH-Bereich von 2 bis 8, insbesondere von 4,5 bis 5,5. Die Einstellung des pH-Bereichs erfolgt zweckmäßigerweise durch Zusatz von Acetaten, beispielsweise Alkalimetallacetaten, insbesondere von Natrium- oder Kaliumacetat oder einer Mischung aus beiden Salzen. Alkalimetallacetate werden beispielsweise in Mengen von 0,5 bis 2 Mol, bezogen auf die Ammoniumverbindung der Formel $R^2O—NH_3Y$, zugesetzt.

Als Lösungsmittel sind beispielsweise Dimethylsulfoxid, Alkohole, wie Methanol, Ethanol, Isopropanol, Benzol, gegebenenfalls chlorierte Kohlenwasserstoffe, wie Chloroform, Dichlorethan, Hexan, Cyclohexan, Ester, wie Essigsäureethylester, Ether, wie Dioxan, Tetrahydrofuran, geeignet.

Die Umsetzung ist nach wenigen Stunden beendet, das Reaktionsprodukt kann dann durch Einengen der Mischung, Zugabe von Wasser und Extraktion mit einem unpolaren Lösungsmittel, wie Methylenchlorid, und Abdestillieren des Lösungsmittels unter vermindertem Druck isoliert werden.

Die Verbindungen der Formel I können außerdem durch Umsetzen der Verbindungen der Formel II mit Hydroxylaminen der Formel $R^2O—NH_2$, in der $R^2$ die obengenannten Bedeutungen hat, in inerten Verdünnungsmitteln bei einer Temperatur zwischen 0 °C und 80 °C, insbesondere zwischen 15 und 70 °C, erhalten werden. Gegebenenfalls kann das Hydroxylamin als wäßrige Lösung eingesetzt werden.

Geeignete Lösungsmittel für diese Umsetzung sind beispielsweise Alkohole, wie Methanol, Ethanol, Isopropanol, Cyclohexanol, gegebenenfalls chlorierte Kohlenwasserstoffe, wie Hexan, Cyclohexan, Methylenchlorid, Toluol, Dichlorethan, Ester, wie Essigsäureethylester, Nitrile, wie Acetonitril, cyclische Ether, wie Tetrahydrofuran.

Weiterhin erhält man die Verbindungen der Formel I auch durch Umsetzung der Verbindungen der Formel II mit Hydroxylamin zu den Oximen und Alkylierung dieser Oxime mit geeigneten Alkylierungsagentien nach folgendem Reaktionsschema :

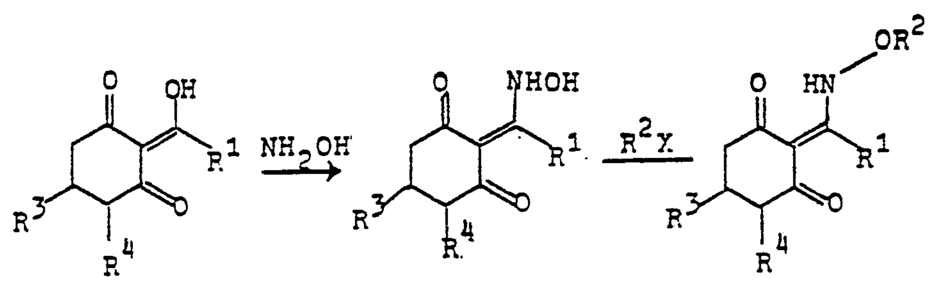


Die Alkalimetallsalze der Verbindungen der Formel I können durch Behandeln dieser Verbindungen mit Natrium- oder Kaliumhydroxid in wäßriger Lösung oder in einem organischen Lösungsmittel, wie Methanol, Ethanol, Aceton, erhalten werden. Auch Natrium- und Kaliumalkoholate können als Basen dienen.

Die anderen Metallsalze, z. B. die Mangan-, Kupfer-, Zink-, Eisen-, Calcium-, Magnesium- und Bariumsalze können aus den Natriumsalzen durch Reaktion mit den entsprechenden Metallchloriden in wäßriger Lösung hergestellt werden.

Die Verbindungen der Formel II können aus Cyclohexan-1,3-dionen der Formel III, die auch in den tautomeren Formeln IIIa und IIIb vorliegen können,

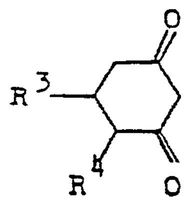
(III)

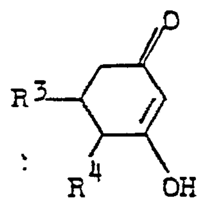
(III a)

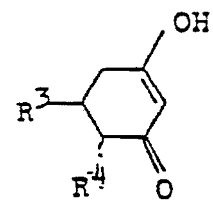
(III b)

nach literaturbekannten Methoden (Tetrahedron Letters, *29*, 2491 (1975)) hergestellt werden.

Außerdem ist eine O-Acylierung der Cyclohexandione-1,3 der Formel III mit anschließender Umlagerung unter saurer Katalyse ($AlCl_3$) nach Synthesis (1978) S. 925 oder basischer Katalyse (Pyridinderivate) nach JP-OS 79/063 052 zur Herstellung der Derivate der Formel II geeignet.

Verbindungen der Formel III sind aus Aldehyden der Formel $R^3$—CH=O nach literaturbekannten Methoden, beispielsweise durch Aldolkondensation mit Aceton und anschließende Cyclisierung mit Malonsäureestern analog Organic Synthesis Coll. Vol. II, Seite 200 (1950), erhältlich. Auch durch Umsetzung des Aldehyds der Formel $R^3$—CHO mit Malonsäure (Org. Reactions, Bd. *15*, Seite 204 (1967), Veresterung der so erhaltenen Säure sowie Cyclisierung mit Acetessigester gelangt man analog dem in Chem. Ber. *96* (1963), Seite 2946 beschriebenen Verfahren zu den Verbindungen der Formel III. Die Aldehyde der Formel $R^3$CHO sind durch Addition der Mercaptane an ungesättigte Aldehyde (DE-PS 855 704) oder durch Hydroformylierung entsprechender Vinyl- oder Allylether zugänglich.

Eine weitere Möglichkeit zur Synthese der Verbindungen der Formel III besteht in der Umsetzung von γ-Halogencrotonsäurederivaten mit Mercaptanen oder Alkoholen und Cyclisierung der so erhaltenen γ-Mercaptocrotonsäureester bzw. γ-Alkoxycrotonsäureester mit Acetessigester wie oben erwähnt.

Das folgende Beispiel erläutert die Herstellung der Cyclohexan-1,3-dionderivate der Formel I. In diesem Beispiel verhalten sich Gewichtsteile zu Volumenteilen wie Kilogramm zu Liter.

Beispiel

12,1 Gewichtsteile 2-Butyryl-4-methoxycarbonyl-5-[2-(2-(ethylthio)-ethylthio)-propyl]-cyclohexan-1,3-dion werden in 150 Volumenteilen Ethanol gelöst und mit 3,3 Gewichtsteilen Allyloxyammoniumchlorid sowie 2,9 Gewichtsteilten Natriumacetat versetzt. Nach 20-stündigem Rühren bei Raumtemperatur wird in Eiswasser gegeben und mit Methylenchlorid extrahiert. Nach Abziehen des Methylenchlorids verbleiben 13,0 g 2-(1-Allyloxyaminobutyliden)-4-methoxycarbonyl-5-(2-ethylthioethylthio-n-propyl)-cyclohexan-1,3-dion als gelbes Öl vom $n_D^{22,5} = 1{,}544\,6$.

| | | | | |
|---|---|---|---|---|
| $C_{22}H_{35}NO_5S_2$ | M = 458 | | | |
| ber. | C 57,7 | H 7,7 | N 3,1 | S 14,0 |
| gef. | C 58,0 | H 7,5 | N 2,9 | S 14,0 |

Die folgenden Verbindungen wurden beispielsweise entsprechend hergestellt :

(Siehe Tabellen Seite 5 ff.)

Die Verbindungen der Formel I können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich ganz nach den Verwendungszwecken ; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, wie z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zu Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

| Verbindung Nr. | $R^1$ | $R^2$ | $R^3$ | $R^4$ | $n_D$ (Temp. °C)/NMR-Daten |
|---|---|---|---|---|---|
| 1 | $n-C_3H_7$ | $C_2H_5$ | $CH_2CH(CH_3)SCH_2CH_2SC_2H_5$ | $COOCH_3$ | 1,5497 (22,5) |
| 2 | $n-C_3H_7$ | $CH_2CH=CH_2$ | $CH_2CH(CH_3)SCH_2CH_2SC_2H_5$ | $COOCH_3$ | 1,5446 (22,5) |
| 3 | $n-C_3H_7$ | $C_2H_5$ | $CH_2CH(CH_3)SCH_2CH_2SC_2H_5$ | H | 1,5476 (22,5) |
| 6 | $n-C_3H_7$ | $CH_2CCl=CCl_2$ | $CH_2CH(CH_3)SCH_2CH_2SC_2H_5$ | H | 1,5638 (22,5) |
| 10 | $n-C_3H_7$ | $CH_2CH=CH_2$ | $CH_2CH(CH_3)SCH_2CH_2OC_2H_5$ | H | 1,5252 (20,5) |
| 11 | $n-C_3H_7$ | $C_2H_5$ | $CH_2CH(CH_3)SCH_2CH_2OC_2H_5$ | H | 1,5300 (22) |
| 16 | $n-C_3H_7$ | $C_2H_5$ | $CH_2CH_2OCH_2CH_2O-n-C_4H_9$ | H | 1,4922 (23) |
| 17 | $n-C_3H_7$ | $CH_2CH=CH_2$ | $CH_2CH_2OCH_2CH_2O-n-C_4H_9$ | H | 1,4984 (23) |
| 19 | $n-C_3H_7$ | $C_2H_5$ | $CH_2CH_2OCH_2CH_2OCH_3$ | H | 1,5006 (22) |
| 20 | $n-C_3H_7$ | $CH_2CH=CH_2$ | $CH_2CH_2OCH_2CH_2OCH_3$ | H | 1,5078 (22) |
| 21 | $n-C_3H_7$ | $CH_2CH=CHCl$ | $CH_2CH_2OCH_2CH_2OCH_3$ | H | 1,5192 (21) |
| 22 | $n-C_3H_7$ | $C_2H_5$ | $CH(CH_3)OCH_2CH_2O-n-C_4H_9$ | H | 1,4895 (24) |
| 23 | $n-C_3H_7$ | $CH_2CH=CH_2$ | $CH(CH_3)OCH_2CH_2O-n-C_4H_9$ | H | 1,4956 (24) |
| 27 | $n-C_3H_7$ | $C_2H_5$ | $CH(CH_3)(OCH_2CH_2)_3OCH_3$ | H | 1,4979 (22) |
| 28 | $n-C_3H_7$ | $CH_2CH=CH_2$ | $CH(CH_3)(OCH_2CH_2)_3OCH_3$ | H | 1,4976 (22) |
| 29 | $n-C_3H_7$ | $CH_2CH=CHCl$ | $CH(CH_3)(OCH_2CH_2)_3OCH_3$ | H | 1,5065 (22) |
| 34 | $n-C_3H_7$ | $C_2H_5$ | $CH(CH_3)(OCH_2CH_2)_2OCH_3$ | H | 1,4951 (22) |
| 35 | $n-C_3H_7$ | $CH_2CH=CH_2$ | $CH(CH_3)(OCH_2CH_2)_2OCH_3$ | H | 1,5009 (22) |
| 44 | $n-C_3H_7$ | $n-C_3H_7$ | $CH_2CH_2OCH_2CH_2OCH_3$ | H | 1,5003 (21) |
| 45 | $n-C_3H_7$ | $CH_2-C\equiv CH$ | $CH_2CH_2OCH_2CH_2OCH_3$ | H | $\delta$ = 3,40 ppm ($OCH_3$)<br>$\delta$ = 2,50 ppm ($\equiv CH$) |

Die folgenden Verbindungen können beispielsweise entsprechend hergestellt werden :

| Verbindung Nr. | $R^1$ | $R^2$ | $R^3$ | $R^4$ | $n_D$ (Temp. °C) |
|---|---|---|---|---|---|
| 4 | $n-C_3H_7$ | $CH_2CH=CH_2$ | $CH_2CH(CH_3)SCH_2CH_2SC_2H_5$ | H | |
| 5 | $n-C_3H_7$ | $CH_2CCl=CH_2$ | $CH_2CH(CH_3)SCH_2CH_2SC_2H_5$ | H | |
| 7 | $n-C_3H_7$ | $CH_2CH=CHCl$ | $CH_2CH(CH_3)SCH_2CH_2SC_2H_5$ | H | |
| 8 | $n-C_3H_7$ | $C_2H_5$ | $CH_2CH(CH_3)SO_2CH_2CH_2SO_2C_2H_5$ | H | |
| 9 | $n-C_3H_7$ | $C_2H_5$ | $CH_2CH(CH_3)SCH_2CH_2OC_2H_5$ | $COOCH_3$ | |
| 12 | $n-C_3H_7$ | $CH_2CH=CHCl$ | $CH_2CH(CH_3)SCH_2CH_2OC_2H_5$ | H | |
| 13 | $n-C_3H_7$ | $CH_2CCl=CHCl$ | $CH_2CH(CH_3)SCH_2CH_2OC_2H_5$ | H | |
| 14 | $n-C_3H_7$ | $C_2H_5$ | $CH_2CH(CH_3)SOCH_2CH_2OC_2H_5$ | H | |
| 15 | $n-C_3H_7$ | $C_2H_5$ | $CH_2CH(CH_3)SO_2CH_2CH_2OC_2H_5$ | H | |
| 18 | $n-C_3H_7$ | $CH_2CH=CHCl$ | $CH_2CH_2OCH_2CH_2O-n-C_4H_9$ | H | |
| 24 | $n-C_3H_7$ | $CH_2CH=CHCl$ | $CH(CH_3)OCH_2CH_2O-n-C_4H_9$ | H | |
| 25 | $n-C_3H_7$ | $C_2H_5$ | $CH(CH_3)(OCH_2CH_2)_3OCH_3$ | $COOCH_3$ | |
| 26 | $n-C_3H_7$ | $CH_2CH=CH_2$ | $CH(CH_3)(OCH_2CH_2)_3OCH_3$ | $COOCH_3$ | |
| 30 | $C_2H_5$ | $C_2H_5$ | $CH(CH_3)(OCH_2CH_2)_3OCH_3$ | H | |
| 31 | $C_2H_5$ | $CH_2CH=CH_2$ | $CH(CH_3)(OCH_2CH_2)_3OCH_3$ | H | |
| 32 | $n-C_3H_7$ | $C_2H_5$ | $CH(CH_3)(OCH_2CH_2)_2OCH_3$ | $COOCH_3$ | |
| 33 | $n-C_3H_7$ | $CH_2CH=CH_2$ | $CH(CH_3)(OCH_2CH_2)_2OCH_3$ | $COOCH_3$ | |

Die folgenden Verbindungen können beispielsweise entsprechend hergestellt werden :

| Verbindung Nr. | $R^1$ | $R^2$ | $R^3$ | $R^4$ | $n_D$ (Temp. °C) |
|---|---|---|---|---|---|
| 36 | $n-C_3H_7$ | $CH_2CH=CHCl$ | $CH(CH_3)(OCH_2CH_2)_2OCH_3$ | H | |
| 37 | $n-C_3H_7$ | $CH_2CCl=CH_2$ | $CH(CH_3)(OCH_2CH_2)_2OCH_3$ | H | |
| 38 | $n-C_3H_7$ | $C_2H_5$ | $CH_2CH_2OCH_2CH_2SC_2H_5$ | H | |
| 39 | $n-C_3H_7$ | $CH_2CH=CH_2$ | $CH_2CH_2OCH_2CH_2SC_2H_5$ | H | |
| 40 | $n-C_3H_7$ | $C_2H_5$ | $CH(CH_3)OCH_2CH_2SC_2H_5$ | H | |
| 41 | $n-C_3H_7$ | $CH_2CH=CH_2$ | $CH(CH_3)OCH_2CH_2SC_2H_5$ | H | |
| 42 | $n-C_3H_7$ | $C_2H_5$ | $CH_2CH_2OCH_2CH_2OCH_3$ | CN | |
| 43 | $n-C_3H_7$ | $C_2H_5$ | $CH_2CH_2OCH_2CH_2OCH_3$ | $CH_3$ | |

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate, können durch Bindung der Wirkstoffe an festen Trägerstoffen hergestellt werden. Feste Trägerstoffe sind Mineralerden wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten zwischen 0,1 und 95 Gewichtsprozent, vorzugsweise zwischen 0,5 und 90 Gewichtsprozent, Wirkstoff.

Beispiele für Formulierungen sind :

I. Man vermischt 90 Gewichtsteile des Wirkstoffs Nr. 16 mit 10 Gewichtsteilen N-Methyl-alphapyrrolidon und erhält eine Lösung, die zur Anwendung in Form kleinster Tropfen geeignet ist.

II. 10 Gewichtsteile des Wirkstoffs Nr. 17 werden in einer Mischung gelöst, die aus 90 Gewichtsteilen Xylol, 6 Gewichtsteilen des Anlagerungsproduktes von 8 bis 10 Mol Ethylenoxid an 1 Mol Ölsäure-N-monoethanolamid, 2 Gewichtsteilen Calciumsalz der Dodecylbenzol-sulfonsäure und 2 Gewichtsteilen des Anlagerungsproduktes von 40 Mol Ethylenoxid an 1 Mol Ricinusöl besteht.

III. 20 Gewichtsteile des Wirkstoffs Nr. 20 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Ethylenoxid an 1 Mol Isooctylphenol und 5 Gewichtsteilen des Anlagerungsproduktes von 40 Mol Ethylenoxid an 1 Mol Ricinusöl besteht.

IV. 20 Gewichtsteile des Wirkstoffs Nr. 19 werden in einer Mischung gelöst, die aus 25 Gewichtsteilen Cyclohexanol, 65 Gewichtsteilen einer Mineralölfraktion vom Siedepunkt 210 bis 280 °C und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.% des Wirkstoffs enthält.

V. 80 Gewichtsteile des Wirkstoffs Nr. 22 werden mit 3 Gewichtsteilen des Natriumsalzes der Diisobutylnaphthalin-sulfonsäure, 10 Gewichtsteilen des Natriumsalzes einer Ligninsulfonsäure aus einer Sulfitablauge und 7 Gewichtsteilen pulverförmigem Kieselsäuregel gut vermischt und in einer Hammermühle vermahlen.

VI. 5 Gewichtsteile des Wirkstoffs Nr. 3 werden mit 95 Gewichtsteilen feinteiligem Kaolin vermischt. Man erhält auf diese Weise ein Stäubemittel, das 5 Gew.% des Wirkstoffs enthält.

VII. 30 Gewichtsteile des Wirkstoffs Nr. 1 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 20 Gewichtsteile des Wirkstoffs Nr. 3 werden mit 2 Teilen Calciumsalz der Dodecylbenzolsulfonsäure, 8 Teilen Fettalkohol-polyglykolether, 2 Teilen Natriumsalz eines Phenol-Harnstoff-Formaldehyd-Kondensates und 68 Teilen eines paraffinischen Mineralöls innig vermischt. Man erhält eine stabile ölige Dispersion.

Die Applikation kann im Vorauflauf- oder im Nachauflaufverfahren erfolgen. Vorzugsweise werden die neuen Wirkstoffe bzw. diese enthaltende Mittel nach dem Auflaufen der unerwünschten Pflanzen ausgebracht. Sind die Wirkstoffe für gewisse Kulturpflanzen weniger verträglich, so können auch Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Aufwandmengen an Wirkstoff betragen je nach Jahreszeit, Zielpflanzen und Wachstumsstadium 0,025 bis 5 kg/ha, vorzugsweise 0,125 bis 3 kg/ha.

Die Wirkung der Cyclohexan-1,3-dionderivate der Formel I auf das Wachstum von Pflanzen aus der Gräserfamilie (Gramineen) und breitblättrigen Kulturpflanzen läßt sich durch Gewächshausversuche

zeigen :

Als Kulturgefäße dienten Plastikblumentöpfe mit 300 $cm^3$ Inhalt und lehmigem Sand mit etwa 1,5 % Humus als Substrat. Die Samen der Testpflanzen wurden nach Arten getrennt flach eingesät. Bei Vorauflaufbehandlung wurden die Wirkstoffe unmittelbar danach auf die Erdoberfläche aufgebracht. Sie wurden hierbei in Wasser als Verteilungsmittel suspendiert oder emulgiert und mittels fein verteilender Düsen gespritzt. Die Aufwandmengen betrugen 3,0 kg/ha. Nach dem Aufbringen der Mittel wurden die Gefäße leicht beregnet, um Keimung und Wachstum in Gang zu bringen. Danach deckte man die Gefäße mit durchsichtigen Plastikhauben ab, bis die Pflanzen angewachsen waren. Diese Abdeckung bewirkte ein gleichmäßiges Keimen der Testpflanzen, sofern dies nicht durch die Wirkstoffe beeinträchtigt wurde.

Zum Zwecke der Nachauflaufbehandlung zog man die Testpflanzen je nach Wuchsform erst bis zu einer Wuchshöhe von 3 bis 15 cm an und behandelte sie danach. Die für die Nachauflaufanwendung benutzten Sojapflanzen wurden in einem mit Torfmull (peat) angereicherten Substrat angezogen. Zur Nachauflaufbehandlung wurden entweder direkt gesäte und in den gleichen Gefäßen aufgewachsene Pflanzen ausgewählt, oder sie wurden erst als Keimpflanzen getrennt angezogen und einige Tage vor der Behandlung in die Versuchsgefäße verpflanzt. Die Aufwandmengen für die Nachauflaufbehandlung variierten je nach Wirkstoff. Sie betrugen 0,125 bzw. 0,25 kg Wirkstoff/ha. Eine Abdeckung unterblieb bei der Nachauflaufbehandlung.

Die Versuchsgefäße wurden im Gewächshaus aufgestellt, wobei für wärmeliebende Arten wärmere Bereiche (20 bis 35 °C) und für solche gemäßigter Klimate 10 bis 25 °C bevorzugt wurden. Die Versuchsperiode erstreckte sich über 2 bis 4 Wochen. Während dieser Zeit wurden die Pflanzen gepflegt und ihre Reaktion auf die einzelnen Behandlungen ausgewertet. Bewertet wurde nach einer Skala von 0 bis 100. Dabei bedeutet 100 kein Aufgang der Pflanzen bzw. völlige Zerstörung zumindest der oberirdischen Teile.

Die in den Gewächshausversuchen verwendeten Pflanzen setzen sich aus folgenden Arten zusammen :

| | |
|---|---|
| Alopecurus myosuroides | (Acker-Fuchsschwanz), |
| Beta vulgaris | (Zuckerrübe), |
| Brassica napus | (Raps), |
| Bromus tectorum | (Dach-Trespe), |
| Digitaria sanguinalis | (Blutfingerhirse), |
| Echinochloa crus-galli | (Hühnerhirse), |
| Glycine max | (Soja), |
| Lolium multiflorum | (Ital. Raygras), |
| Setaria italica | (Kolbenhirse), |
| Triticum aestivum | (Weizen). |

Als Vergleichsmittel diente 2-(1-Ethoxyaminobutyliden)-5-(2-ethylthiopropyl)-cyclohexan-1,3-dion (DE-OS 28 22 304 ; A).

Bei Vorauflaufanwendung zeigen beispielsweise die Verbindungen Nr. 1, 3, 16, 17, 19, 20 eine beachtliche herbizide Wirkung gegen Grasarten.

Bei Nachauflaufanwendung bekämpft beispielsweise die Verbindung Nr. 22 mit 0,125 bzw. 0,25 kg Wirkstoff/ha unerwünschte Grasarten. Sie ist dabei voll verträglich für breitblättrige Kulturen und verursacht an Weizen nur eine geringe Beeinträchtigung. Das bekannte Vergleichsmittel A schädigt den Weizen dagegen sehr stark. Die Verbindung Nr. 3 zeigt bei Nachauflaufanwendung eine bessere Aktivität gegen Bromus tectorum als das Vergleichsmittel A.

In Anbetracht der Verträglichkeit und der Vielseitigkeit der Applikationsmethoden können die erfindungsgemäßen Verbindungen noch in einer weiteren Zahl von Kulturpflanzen zur Beseitigung unerwünschter Wildgräser oder grasartiger Kulturpflanzen, sofern sie an gewissen Standorten unerwünscht sind, eingesetzt werden. In Betracht kommen beispielsweise folgende Kulturen :

| Botanischer Name | Deutscher Name |
|---|---|
| Allium cepa | Küchenzwiebel |
| Ananas comosus | Ananas |
| Arachis hypogaea | Erdnuß |
| Asparagus officinalis | Spargel |
| Beta vulgaris spp. altissima | Zuckerrübe |
| Beta vulgaris spp. rapa | Futterrübe |
| Beta vulgaris spp. esculenta | Rote Rübe |
| Brassica napus var. napus | Raps |
| Brassica napus var. napobrassica | Kohlrübe |
| Brassica napus var. rapa | Weiße Rübe |
| Brassica rapa var. silvestris | Rübsen |
| Camellia sinensis | Teestrauch |

| Botanischer Name | Deutscher Name |
|---|---|
| Carthamus tinctorius | Saflor — Färberdistel |
| Carya illinoinensis | Pekannußbaum |
| Citrus limon | Zitrone |
| Citrus maxima | Pampelmuse |
| Citrus reticulata | Mandarine |
| Citrus sinensis | Apfelsine, Orange |
| Coffea arabica (Coffea canephora, Coffea liberica) | Kaffee |
| Cucumis melo | Melone |
| Cucumis sativus | Gurke |
| Daucus carota | Möhre |
| Elaeis guineensis | Ölpalme |
| Fragaria vesca | Erdbeere |
| Glycine max | Sojabohne |
| Gossypium hirsutum (Gossypium arboreum, Gossypium herbaceum, Gossypium vitifolium) | Baumwolle |
| Helianthus annuus | Sonnenblume |
| Helianthus tuberosus | Topinambur |
| Hevea brasiliensis | Parakautschukbaum |
| Hordeum vulgare | Gerste |
| Humulus lupulus | Hopfen |
| Ipomoea batatas | Süßkartoffeln |
| Juglans regia | Walnußbaum |
| Lactua sativa | Kopfsalat |
| Lens culinaris | Linse |
| Linum usitatissimum | Faserlein |
| Lycopersicon lycopersicum | Tomate |
| Malus spp. | Apfel |
| Manihot esculenta | Maniok |
| Medicago sativa | Luzerne |
| Metha piperita | Pfefferminze |
| Musa spp. | Obst- und Mehlbanane |
| Nicotiana tabacum (N. rustica) | Tabak |
| Olea europaea | Ölbaum |
| Phaseolus lunatus | Mondbohne |
| Phaseolus mungo | Erdbohne |
| Phaseolus vulgaris | Buschbohnen |
| Petroselinum crispum spp. tuberosum | Wurzelpetersilie |
| Picea abies | Rotfichte |
| Abies alba | Weißtanne |
| Pinus spp. | Kiefer |
| Pisum sativum | Gartenerbse |
| Prunus avium | Süßkirsche |
| Prunus domestica | Pflaume |
| Prunus duscis | Mandelbaum |
| Prunus persica | Pfirsich |
| Pyrus communis | Birne |
| Ribes sylvestre | Rote Johannisbeere |
| Ribes uva-crispa | Stachelbeere |
| Ricinus communis | Rizinus |
| Saccharum officinarum | Zuckerrohr |
| Secale cereale | Roggen |
| Sasamum indicum | Sesam |
| Solanum tuberosum | Kartoffel |
| Spinacia oleracea | Spinat |
| Theobroma cacao | Kakaobaum |
| Trifolium pratense | Rotklee |
| Triticum aestivum | Weizen |
| Vaccinium corymbosum | Kulturheidelbeere |
| Vaccinium vitis-idaea | Preißelbeere |
| Vicia faba | Pferdebohnen |
| Vigna sinensis (V. unguiculata) | Kuhbohne |
| Vitis vinifera | Weinrebe |

Zur Verbreiterung des Wirkungsspektrums und zur Erzielung synergistischer Effekte können die Cyclohexan-1,3-dionderivate der Formel I mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoxazinderivate, Benzothiadiazinone, 2,6-Dinitroaniline, N-Phenylcarbamate, Thiolcarbamate, Halogencarbonsäuren, Triazine, Amide, Harnstoffe, Diphenylether, Triazinone, Uracile, Benzofuranderivate und andere in Betracht.

Außerdem ist es nützlich, die neuen Verbindungen allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

**Patentansprüche**

1. Cyclohexan-1,3-dionderivate der Formel

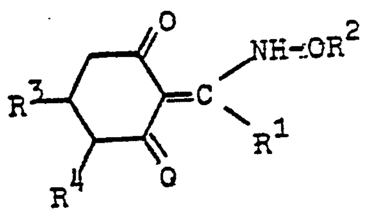

(I)

in der

$R^1$ $C_1$-$C_4$-Alkyl,

$R^2$ $C_1$-$C_5$-Alkyl, gegebenenfalls durch Halogen substituiertes $C_2$-$C_5$-Alkenyl oder $C_2$-$C_5$-Alkinyl,

$R^3$ $C_3$-$C_{10}$-Alkyl, das in beliebiger Position 2 bis 4 der Heteroatome O und/oder S und/oder der Gruppen —SO— und/oder —$SO_2$— enthält und

$R^4$ Wasserstoff, Cyano, Methyl oder —$COOR^5$, wobei $R^5$ für $C_1$-$C_5$-Alkyl steht, bedeuten,

sowie Salze dieser Verbindungen.

2. Cyclohexan-1,3-dionderivate der Formel I gemäß Anspruch 1, dadurch gekennzeichnet, daß $R^3$ Alkylthioalkylthioalkyl oder Alkoxyalkoxyalkyl mit jeweils 3 bis 10 Kohlenstoffatomen und $R^4$ Wasserstoff bedeuten.

3. Verfahren zur Herstellung eines Cyclohexan-1,3-dionderivates der Formel I gemäß Anspruch 1, dadurch gekennzeichnet, daß man eine Verbindung der Formel

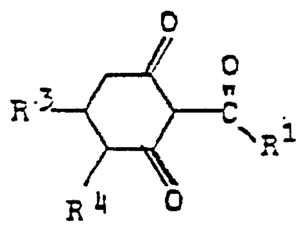

(II)

in der $R^1$, $R^3$ und $R^4$ die im Anspruch 1 genannten Bedeutungen haben,

a) mit einer Ammoniumverbindung der Formel $R^2O$—$NH_3Y$, in der $R^4$ die im Anspruch 1 genannten Bedeutungen hat und Y ein Anion bedeutet, in einem inerten Verdünnungsmittel gegebenenfalls in Gegenwart von Wasser bei einer Temperatur zwischen 0 und 80 °C in Gegenwart einer Base oder

b) mit einem gegebenenfalls in wäßriger Lösung vorliegenden Hydroxylamin der Formel $R^2O$—$NH_2$, in der $R^2$ die im Anspruch 1 genannten Bedeutungen hat, in einem inerten Lösungsmittel umsetzt.

4. Herbizid, enthaltend ein Cyclohexan-1,3-dionderivat der Formel I oder ein Salz eines solchen Cyclohexan-1,3-dionderivats gemäß Anspruch 1.

5. Herbizid, enthaltend inerte Zusatzstoffe und ein Cyclohexan-1,3-dionderivat der Formel I oder ein Salz eines solchen Cyclohexan-1,3-dionderivates gemäß Anspruch 1.

6. Herbizid, enthalten inerte Zusatzstoffe und ein Cyclohexan-1,3-dionderivat der Formel I oder ein Salz eines solchen Cyclohexan-1,3-dionderivates gemäß Anspruch 2.

7. Herbizid, enthaltend inerte Zusatzstoffe und 0,1 bis 95 Gew.% eines Cyclohexan-1,3-dionderivats der Formel I gemäß Anspruch 1.

8. Verfahren zur Bekämpfung unerwünschten Pflanzenwachstums, dadurch gekennzeichnet, daß man die unerwünschten Pflanzen und/oder die von unerwünschtem Pflanzenwachstum freizuhaltende Fläche mit einer herbizid wirksamen Menge eines Cyclohexan-1,3-dionderivates der Formel I oder eines Salzes eines solchen Cyclohexan-1,3-dionderivates gemäß Anspruch 1 behandelt.

**Claims**

1. A cyclohexane-1,3-dione derivative of the formula

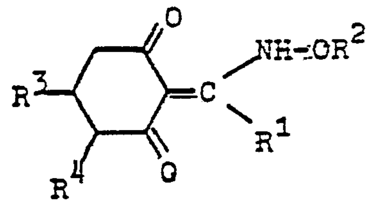

(I)

where

$R^1$ is $C_1$-$C_4$-alkyl,

$R^2$ is $C_1$-$C_5$-alkyl, unsubstituted or halogen-substituted $C_2$-$C_5$-alkenyl or $C_2$-$C_5$-alkynyl,

$R^3$ is $C_3$-$C_{10}$-alkyl, which contains 2, 3 or 4 of the heteroatoms O and/or S and/or the groups —SO— and/or —$SO_2$— in any desired position, and

$R^4$ is hydrogen, cyano, methyl or —$COOR^5$, where $R^5$ is $C_1$-$C_5$-alkyl,

or a salt thereof.

2. A cyclohexane-1,3-dione derivative of the formula I as claimed in claim 1, where $R^3$ is alkylthioalkylthioalkyl or alkoxyalkoxyalkyl of 3 to 10 carbon atoms and $R^4$ is hydrogen.

3. A process for the preparation of a cyclohexane-1,3-dione derivative of the formula I as claimed in claim 1, wherein a compound of the formula

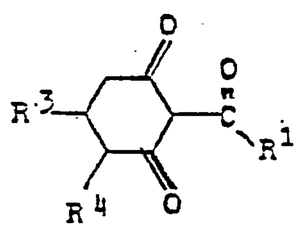

(II)

where $R^1$, $R^3$ and $R^4$ have the meanings given in claim 1, is reacted

a) with an ammonium compound of the formula $R^2O$—$NH_3Y$, where $R^2$ has the meanings given in claim 1 and Y is an anion, in an inert diluent at a temperature of from 0 to 80 °C in the presence or absence of water and in the presence of a base, or

b) with a hydroxylamine which may be in the form of an aqueous solution and is of the formula $R^2O$—$NH_2$, where $R^2$ has the meanings given in claim 1, in an inert solvent.

4. A herbicide containing a cyclohexane-1,3-dione derivative of the formula I or a salt of a cyclohexane-1,3-dione derivative as claimed in claim 1.

5. A herbicide containing inert additives and a cyclohexane-1,3-dione derivative of the formula I or a salt of a cyclohexane-1,3-dione derivative as claimed in claim 1.

6. A herbicide containing inert additives and a cyclohexane-1,3-dione derivative of the formula I or a salt of a cyclohexane-1,3-dione derivative as claimed in claim 2.

7. A herbicide containing inert additives and from 0.1 to 95 wt% of a cyclohexane-1,3-dione derivative of the formula I as claimed in claim 1.

8. A process for combating the growth of unwanted plants, wherein the unwanted plants and/or the area to be kept free from unwanted plant growth are treated with a herbicidally effective amount of a cyclohexane-1,3-dione derivative of the formula I or a salt of a cyclohexane-1,3-dione derivative as claimed in claim 1.

**Revendications**

1. Dérivés de cyclohexane-1.3-dione de formule

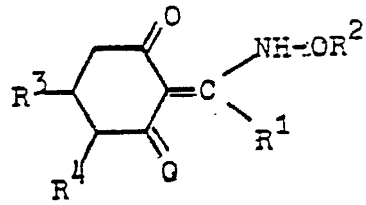

(I)

dans laquelle

$R^1$ représente alkyle en $C_1$-$C_4$

$R^2$ alkyle en $C_1$-$C_5$, alcényle en $C_2$-$C_5$ ou alkinyle en $C_2$-$C_5$, éventuellement substitués par halogène.

$R^3$ alkyle en $C_3$-$C_{10}$, qui contient en position quelconque 2 à 4 des hétéroatomes O et/ou S et/ou des groupes —SO— et/ou —$SO_2$—, et

$R^4$ représente hydrogène, cyano, méthyle ou —$COOR^5$, $R^5$ étant mis pour alkyle en $C_1$-$C_5$ ainsi que des sels de ces composés.

2. Dérivés de cyclohexane-1,3-dione de formule I selon la revendication 1, caractérisés par le fait que $R^3$ représente alkylthioalkylthioalkyle ou alkoxyalcoxyalkyle ayant chacun 3 à 10 atomes de carbone et $R^4$ représente hydrogène.

3. Procédé de préparation d'un dérivé de cyclohexane-α1,3-dione de formule I selon la revendication 1, caractérisé par le fait qu'on fait réagir un composé de formule

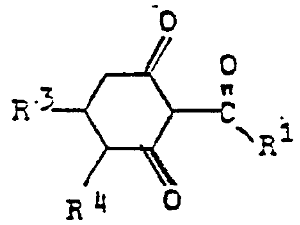

(II)

dans laquelle $R^1$, $R^3$ et $R^4$ ont les significations indiquées dans la revendication 1

a) avec un composé d'ammonium de formule $R^2O$—$NH_3Y$ dans laquelle $R^2$ a les significations indiquées dans la revendication 1 et Y un anion, dans un diluant inerte, éventuellement en présence d'eau, à une température comprise entre 0 et 80 °C, en présence d'une base, ou

b) avec une hydroxylamine de formule $R^2O$—$NH_2$, se trouvant éventuellement en solution aqueuse, dans laquelle $R^2$ a les significations indiquées dans la revendication 1, dans un solvant inerte.

4. Herbicide, contenant un dérivé de cyclohexane-1,3-dione, de formule I ou un sel d'un tel dérivé de cyclohexane-1,3-dione selon la revendication 1.

5. Herbicide, contenant des additifs inertes et un dérivé de cyclohexane-1,3-dione de formule I ou un sel d'un tel dérivé de cyclohexane-1,3-dione selon la revendication 1.

6. Herbicide contenant des additifs inertes et un dérivé de cyclohexane-1,3-dione de formule I ou un sel d'un tel dérivé de cyclohexane-1,3-dione selon la revendication 2.

7. Herbicide, contenant des additifs inertes et 0,1 à 95 % en poids d'un dérivé de cyclohexane-1,3-dione de formule I selon la revendication 1.

8. Procédé de lutte contre la croissance des plantes indésirables, caractérisé par le fait que l'on traite les plantes indésirables et/ou les surfaces à maintenir exemptes de la croissance des plantes indésirables avec une quantité efficace du point de vue herbicide d'un dérivé de cyclohexane-1,3-dione de formule I ou un sel d'un tel dérivé de cyclohexane-1,3-dione selon la revendication 1.